# EUROPEAN PATENT APPLICATION

(11) **EP 1 213 694 A1**
(43) Date of publication of application: **12.06.2002**
(21) Application number: 00650202.5
(22) Date of filing: 30.11.2000
(51) Int. Cl.: G09B 7/00, G06F 9/44

(54) **A computer based training system and method**

(71) Applicant: CBT (TECHNOLOGY) LIMITED, Dublin 2 (IE)
(72) Inventor: Marsh, Thomas Gerard, Dublin 18 (IE); Hardiman, Derek, Leixlip, County Kildare (IE)
(74) Representative: Weldon, Michael James

(57) **Abstract**

A computer based training system (1) resides on a server and allows a conventional client computer such as a PC to be used by a student to conduct a course. Information resource (30), content (37), and navigation (31) frames are generated by associated frame programs which operate independently. An Applet control program (32) is a frame program establishing a hidden frame. It receives requests from the information, content, and navigation frame programs and parses an XML content data file to take the necessary actions for progress through the course. The navigation frame program updates progress variables.

## Description

### INTRODUCTION

### Field of the Invention

The invention relates to a computer based training system and method.

### Prior Art Discussion

Our prior European Patent Specification No. 690426B1 describes a computer based training product in which an interface file controls output of content for user training. The product operates very well, however each product must be developed fully using the process described in this specification. While modification of the system is possible, it is difficult because it involves time-consuming modification of code and media records. Also, while this product can be executed in any desired stand alone or client/server environment, it is not particularly suited to a client/server environment with frequent modification of course content.

The invention is therefore directed towards providing a computer based training system and method to address these issues.

Another object is to provide for more uniform presentation of interactive options for a user across different products.

### SUMMARY OF THE INVENTION

According to the invention, there is provided a computer based training method carried out by a computer used by a student,
wherein the computer is a client computer and the method comprises the steps of a server-based training system dynamically downloading training content to the client computer in response to student instructions received by the client computer.

In one embodiment, the system downloads a control program, a content data file, and a navigation frame program to the client computer, and the step of downloading content comprises the sub-steps of:
the navigation frame program notifying the control program of the need for content according to a student request, and
the control program requesting the content from the system according to the content data file.

In one embodiment, the content data file defines the location of selected content on the system.

In another embodiment, the content data file relates to one or more learning object, each learning object containing a plurality of learning points.

In one embodiment, the system also downloads a content frame program for a screen frame dedicated to output of content.

In another embodiment, the control program is registered in the client computer as a frame program, and its frame dimensions are such that the frame is hidden from the student.

In a further embodiment, the navigation frame program establishes a frame in the client computer for navigation user interaction independently of current content.

In one embodiment, the navigation frame program notifies the control program of a next selected content according to a student request.

In another embodiment, the navigation frame program operates independently of the content frame program.

In a further embodiment, the system downloads an information frame program which establishes a frame in the client computer for student selection of access to requested auxiliary information resources separate from the content defined in the content data file, and said information frame program requests relevant URL's from the control program.

In one embodiment, the information frame program notifies the control program of requested resources, and the control program directs access to the URL's of the information frame.

In another embodiment, the information frame program operates independently of the content frame program.

In a further embodiment, the system downloads a progress variables frame program, said program establishes a hidden frame in the client computer, and receives updates to course progress variables as a student progresses through a course.

In one embodiment, the navigation frame program updates said progress variables, and said updates are performed when a new learning point is activated.

In another embodiment, the system stores information resource settings accordingly to a student registration configuration and each learning object as represented by the content data file, and the system downloads said setting for the information frame program.

In another embodiment, the settings are embedded in the content data file, and the control program parses the content data file to obtain the settings in response to a request from the information frame program.

In one embodiment, the system downloads a start document at the start of a course, the start document defines an initial screen display and identifiers of progress variables to be updated with assistance from the progress variables frame program.

In another embodiment, the system also downloads command line parameters indicating the location in the system of the content data file.

In a further embodiment, the system downloads the control program after downloading the command line parameters, and the control program parses the command line parameters to determine the location of the content data file.

In one embodiment, at the start of a course the control program parses the content data file to locate an identifier for a content map and causes the content map to be downloaded, and the content frame program allows student selection of desired content.

In another embodiment, initial content is downloaded in response to a student selection using the content map, and subsequent content is selected in response to student inputs for the navigation frame program.

According to another aspect, the invention provides a computer based training method carried out by a client computer used by a student and a server-based training system, the method comprising the steps of:
the system downloading a control program and command line parameters to the client computer, the control program being a frame program having a hidden frame;
the control program parsing the command line parameters to determine the location of a content data file and requesting the system to download said file;
the system downloading a navigation frame program which generates a navigation frame on the client computer,
the student selecting desired content by making selections in the navigation frame, the navigation frame program notifying the control program of the selections, the control program parsing the content data field to determine location of said content, and the control program requesting said content from the system; and
the navigation frame program updating course progress variables as fresh content is downloaded and played.

In one embodiment, the method comprises the further steps of the system downloading a content frame program, said program establishing a frame for output of said content and notifying the control program of content-related student requests.

In another embodiment, the method comprises the further steps of the system downloading a progress variables frame program, said program establishing a hidden frame in the client computer, and the control program parsing said progress variables frame program to satisfy system tracking requests.

In one embodiment, the method comprises the further steps of the system downloading an information frame program, said program establishing an information resources frame with URL buttons, and the control program accessing information resources in response to student pressing of said buttons.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagrammatic representation of a system of the invention;
Fig. 2 is a flow diagram illustrating a computer based training method;
Fig. 3 is a screen shot of a sample interface screen;
Fig. 4 is a more detailed view of an information frame of the screen;
Fig. 5 is a screen shot of a resource accessed via the information frame;
Fig. 6 is view of sample content; and
Fig. 7 is a more detailed view of a navigation frame of the screen of Fig. 1.

### Detailed Description of the Embodiments

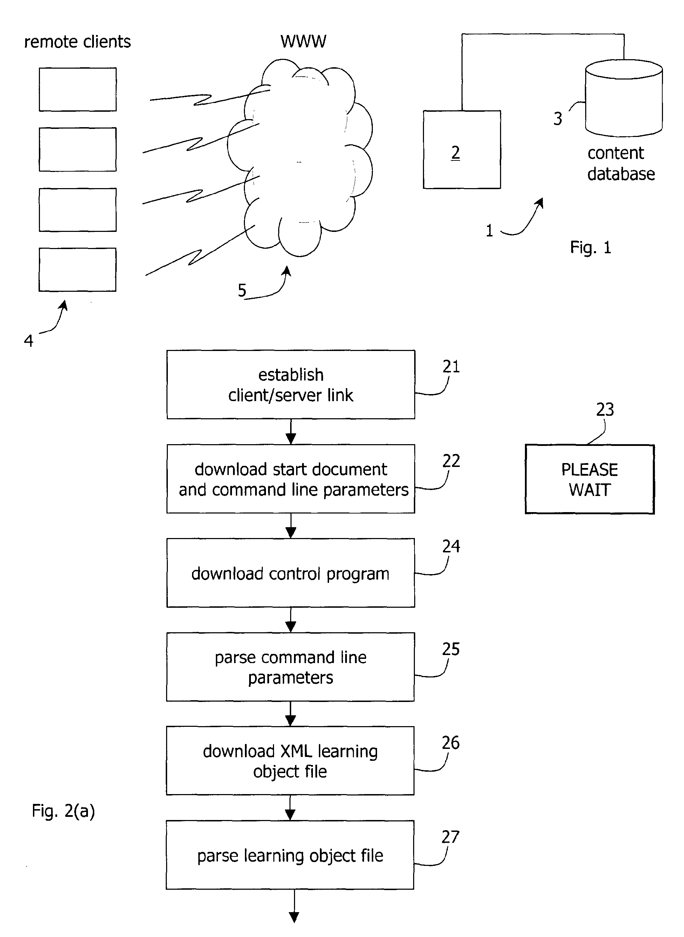

Referring to Fig. 1, a computer based training system 1 is hosted on a Web server and comprises executables 2 accessing a content database 3. The actual training is carried out with use of a user client computer 4 which does not need to be pre-programmed for computer based training. Communication with client computers 4 is via the Internet 5. However, the link may alternatively be via any suitable network including local and wide area networks. Indeed flexibility in choice of the network environment is a major advantage of the invention.

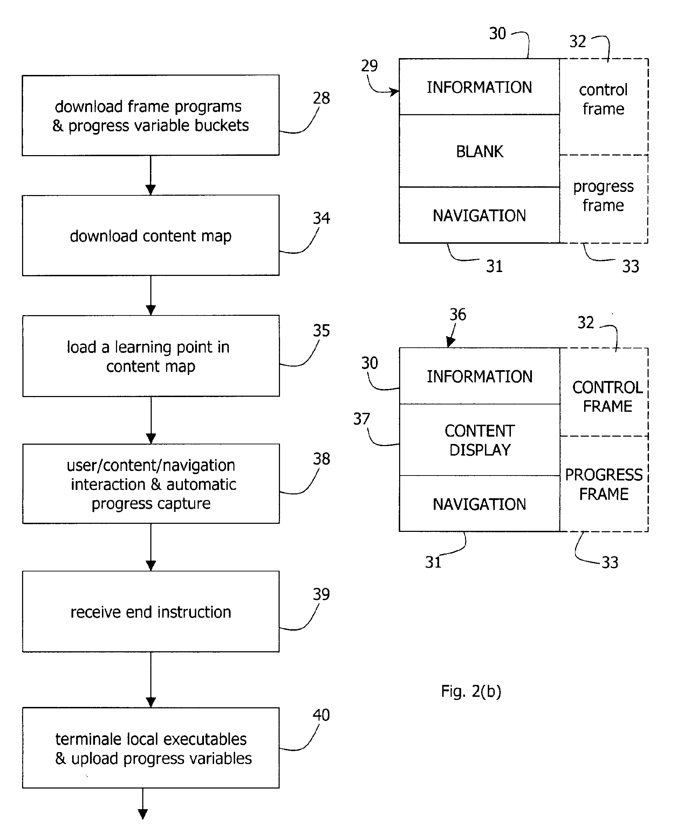

Figs. 2(a) and 2(b) together describe a computer based training method 20 implemented by a client computer 4 in communication with the system 1. A link is established in step 21, upon which a start document and command line parameters are downloaded provided the user who established the connection is authorised as a registered subscriber. The start document allows the client computer 2 to generate a holding "PLEASE WAIT" screen 23. The command line parameters include an address for an XML content data file in the system 1. The command line parameters also contain AICC_S ID and AICC_URL parameters for progress tracking to an AICC compliant content tracking system.

The system 1 then downloads a control program Java Applet in step 24. This parses the command line parameters in step 25 to obtain the XML file's location on the system 1.

The Applet in step 26 then downloads the XML content data file (also referred to in this specification as an "XML file"). This file relates to a single learning object (LO) comprising a number of learning points (LPs). However a single XML file may relate to a number of LOs. The Applet then parses the XML file to determine a list of LPs in step 27.

In step 28 the Applet downloads user interface files as specified in the XML file. These include frame programs and progress variable buckets. The frame programs are as follows:-
*"info.html"* defining an information frame 29 in an interface screen 29,
*"nav.html"* defining a navigation frame 31 in the screen 29,
*"content.html"* which for the time being (usually a few milliseconds) is blank.

These frame programs have the capacity to generate three frames on the client computer screen as shown in Fig. 2(b). In addition, the Applet and the progress variable buckets are also downloaded to the client computer and are contained in hidden frames. These are indicated by interrupted lines 32 and 33 in the interface screen 29 shown in outline in Fig. 2(b).

The XML file contains a content map address and this is read by the Applet in step 6, which then downloads a content map from the system 1 in step 34. In step 35, when downloaded, the content map instructs the Applet to load an LP according to a button pressed by the user on the interface screen. A screen 36 is then displayed, with content of the selected LP in a control content frame 37.

Progress of the course is indicated generally by the step 38. This comprises many cycles of selected content sending a message to the Applet via JavaScript function calls to download the next content for the frame 37, and also updating the progress variables. These cycles are initiated by the user pressing the "Forward" and "Backward" buttons in the navigation frame 31, causing the Applet to be instructed to read the next or previous content address in the XML file for downloading of the selected content to the frame 37. The *nav.html* frame program allows selection of content in a more versatile manner as it allows selection of any LP, or indeed any LO if the XML file contains content data for a number of LOs. Again, the fresh content is downloaded by the Applet being notified (in this case by the *nav.html* frame program) to download the selected content. Also, the *nav.html* frame program updates the progress variables when each fresh selection is made.

End of a course is requested by the student in step 39 and the control program uploads progress data before executables on the client computer are terminated in step 40.

In more detail, the visible frames 30, 31, and 37 have HTTP links which cause the client computers browser to call JavaScript functions when the user clicks the mouse at the relevant screen areas. The JavaScript functions in turn call the Applet by transmitting a message asking it to download the relevant content. The Applet scans the XML file to locate the required content address and causes the addressed content file to be downloaded from the server.

The Applet (control program) is registered as a separate frame although not with a visible frame on the screen. This allows it to be independent of the visible frames and so it may be easily modified by the system 1 independently of content, information services, and navigation functions. For similar reasons the progress variable bucket also acts independently. The Applet reads the progress variables at the end of the LO or when the user decides to terminate the session if this is before the end of the LO has been reached. The Applet transmits progress updates to the system 1, which writes them to the database 3. The system 1 includes a tracking application which uses this data for generation of tracking reports.

The information frame program *info.html* and the XML file contain instructions for the information options presented to the user. The system 1 automatically generates these each time a client computer 4 accesses it to start a course. The decision on these options is based on both the course content (LO) and on options configured by the user at registration. The mechanism for generation of the information frame 30 is:
the system 1 stores options in a user record during registration,
the system 1 stores possible options for each LO in its content database,
the system 1 reads both databases at commencement of a course and determines the information options,
the system 1 embeds the options in the XML file associated with the LO and in the *info.html* by frame program,
the Applet at the client side parses the information option strings in the XML file in response to an *info.html* request as to whether it should display resource or mentoring buttons. The Applet replies to the *info.html* with a Yes or No response, and if Yes it informs the *info.html* what URL it should use for each button. For example a URL may be for a mentoring Web side to which access is allowed because it is consistent with both the user registration and the LO.

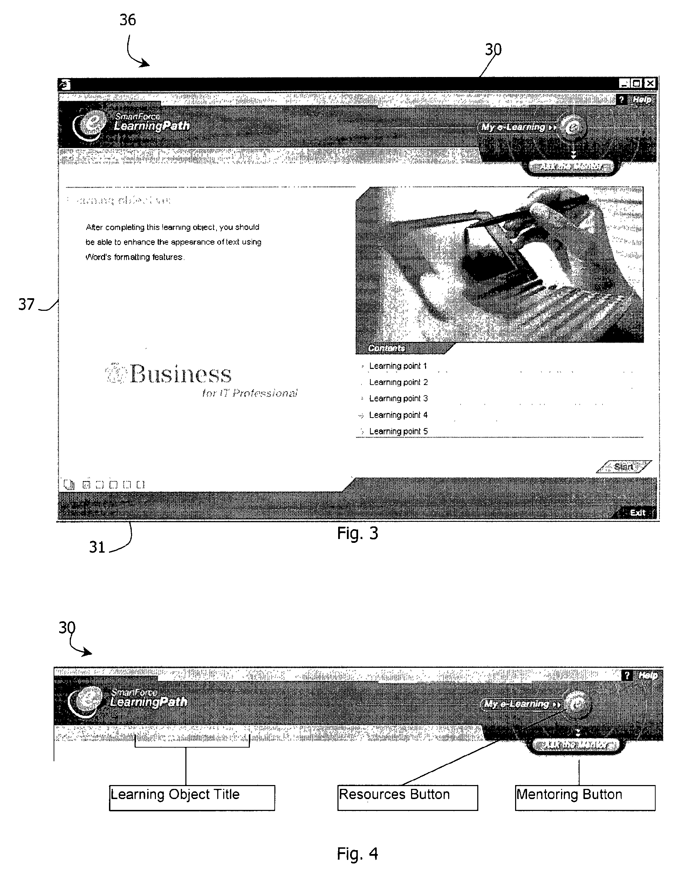

Referring to Figs. 3 and 4 the information frame 30 provides three main functions:-
display of a learning object title;
a resources button, and
a mentoring button.

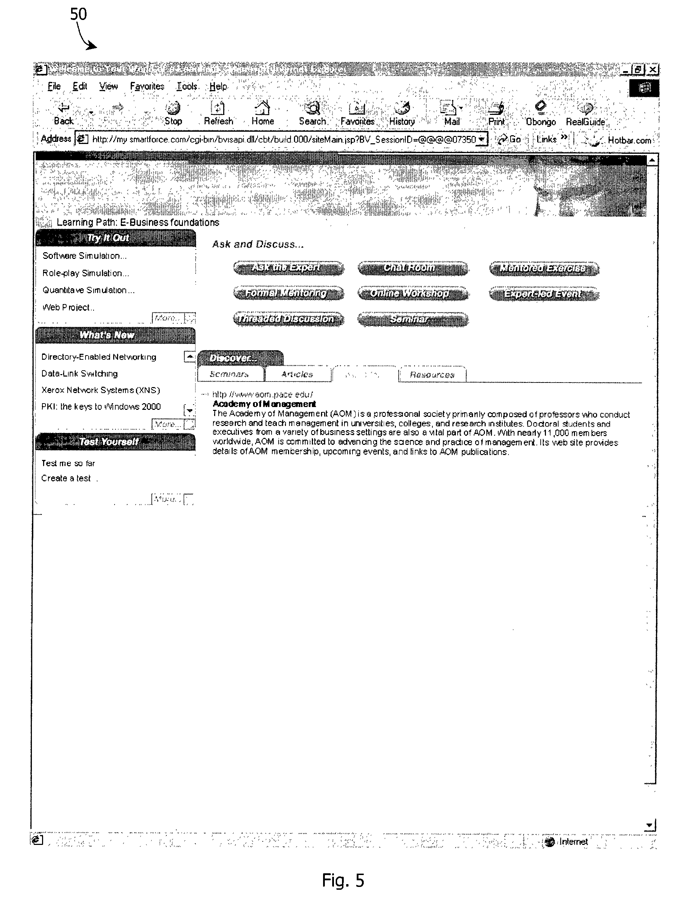

The learning object title is dynamically maintained according to the current learning object. Clicking the resources button opens a new window containing a list of resources relevant to the learning object. An example is shown in Fig. 5.

Clicking the mentoring button opens a new window whose contents are provided by a server side process. This window allows the user to interact with a mentor.

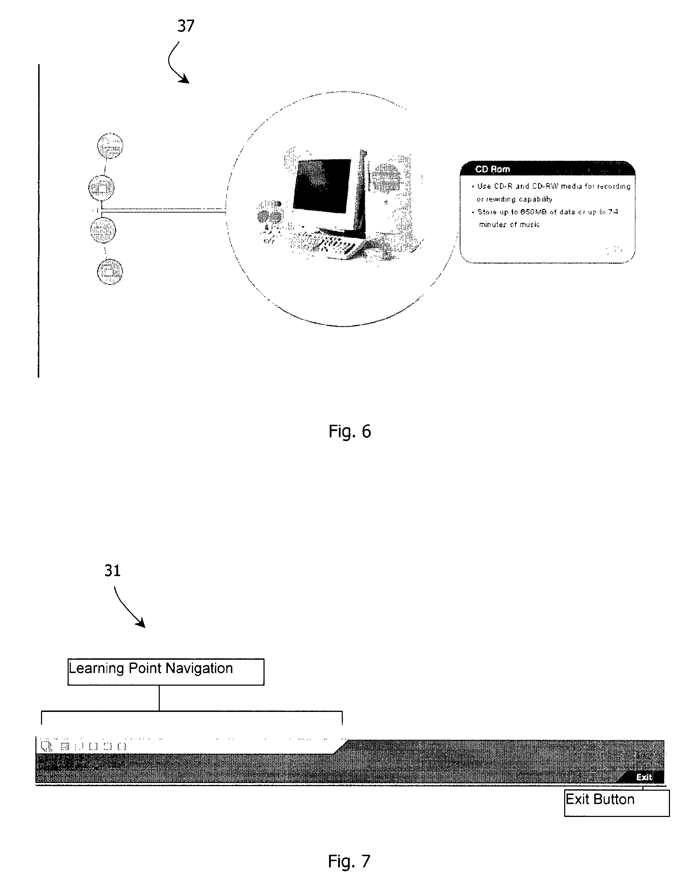

Referring to Fig. 6, the content frame 37 is where the course content is played. Content played in the client computer can be authored using any tool desired as long as it can communicate with an applet to notify it of events (e.g. finished, load some more content, etc.). The navigation frame 31 allows the client computer to operate to conduct a course without knowledge of the structure or purpose of the content. This gives excellent creative freedom to the designers when authoring the content.

As shown in Fig. 7, the navigation frame includes an exit button which causes the active window to be closed when clicked, and a learning point navigation bar. The learning point navigation bar allows the student to jump from point to point in the learning object content. The first box on the bar brings the student to the learning object map when clicked. Aside from that there is one box on the navigation bar for each learning point in the learning object. Hovering over a box displays the title of that learning point (generated by JavaScript). Clicking on the box brings the student to the beginning of that learning point.

When a learning object is launched the first thing the student sees is the learning object map, shown in Fig. 3. The map occupies the content frame of the player interface as described above. The rest of the interface (the information and navigation frames) is the same no matter where the course is. This map provides the student with:
- The learning objective for this learning object (top left)
- A conceptual graphic which can be changed based on the user's organisation details (top right)
- A second conceptual graphic which can be replaced with company logos, etc. (bottom left)
- A list of the learning points within the learning object (bottom right)
- A start button to begin the learning object

Clicking on a learning point title brings the student directly to the start of that learning point. This is the same as clicking on a box in the learning point navigation bar. Clicking on the start button brings the student to the start of the first learning point in the object.

An important aspect of the system 1 is that it can conduct a variety of courses by simply coupling with the relevant courseware content. This allows excellent flexibility and helps reduce lead time in release of a course. Also, as far as the student is concerned he or she has the same information and navigation features irrespective of the learning object.

The following is a sample of the start document referred to above.

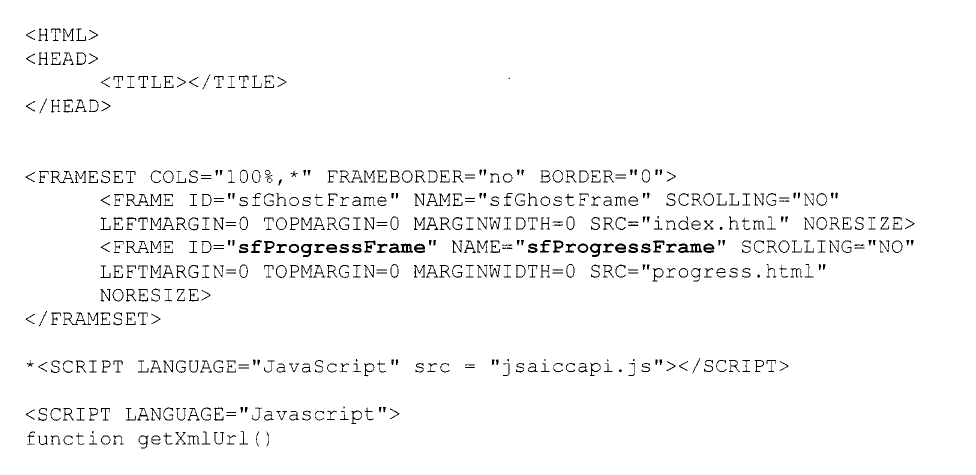

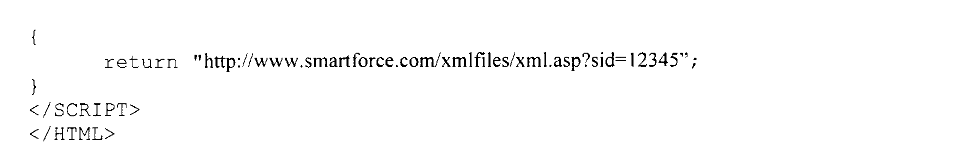

This document basically consists of a frame set followed by some JavaScript. The following sections explain their purpose. The line marked with "*" loads a version of the AICC standard JavaScript API. This API in turn sets variables in the progress frame which is returned by the Applet to the server.

### The Frame Sets

The start document contains a frame set with one frame each for the progress, content, and Applet frames. All actual content is loaded into the content frame 37, called sfContentFrame. The structure and content of sfCourseFrame is of no importance to the system 1. The only requirement is that the three named frames exist.

### The JavaScript

After the frame sets there is some JavaScript that is generated by an e-Learning Management System (eLMS) of the systems 1. The first line is:

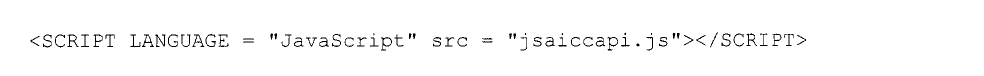

This line specifies where the JavaScript file that implements the AICC compliant JavaScript API is. The client computer 4 makes calls to this API for progress tracking. Generating this line allows the eLMS to implement the API in different ways. AICC requires that a session ID that is issued by the eLMS be used when reporting progress. This session ID can only be used for one learning object use. The initial session ID is passed on the command line used to invoke a course. Subsequent ID's will be obtained by calling this function:

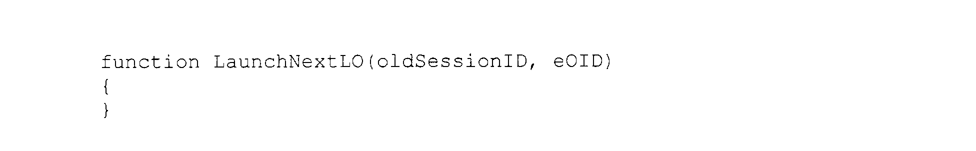

This function takes in the last session ID used and an eOID, which uniquely identifies the usage of this learning object. The eOID is obtained from the XML file. It is the ID of the top-level topic tag in the file, which will be generally the Learning Path. The new ID to use will be returned from this function.

The last section in the start document is:

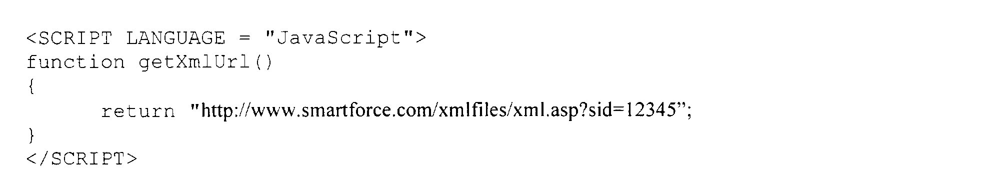

This function is called to get the XML file that describes the flow of the learning objects it is to play. getXmlUrl() returns a string to the file location. This can be a static URL or, as in this example, a URL to a CGI program which will generate the appropriate XML file. If the eLMS does not generate this function then the location of the XML file must be provided on the command line.

### Command Line Parameters

The eLMS must pass a session ID on the URL line. This ID is used for tracking the first learning object described in the XML file. The format of the launch URL is:

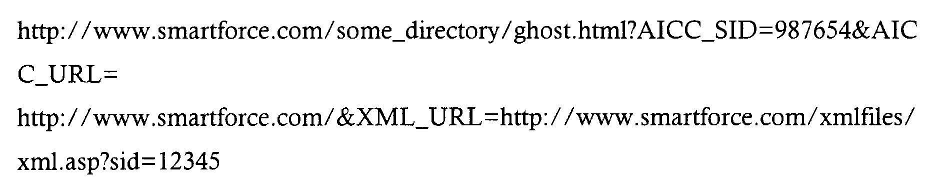

When the course has started the URL that was used to start it is parsed to look for AICC_SID and it's value. AICC_URL provides the URL to the AICC tracking system. The value of XML_URL provides the URL to the XML file that describes the layout of the course. If XML_URL is not specified then getXmlUrl() must be provided in the start document. The progress frame program contains the information required by the Applet to make an AICC compliant progress tracking request.

### XML File

In the XML file ELO.XML is an XML description of the learning object content. ELO.LRN provides a manifest in LRN format. This lists all the files that are required to run this learning object. This file is used by a download utility. ELO.XML is read into a database when the learning object is installed on the system 1. This allows custom learning paths to be generated by a server side process which will generate an XML file which represents multiple learning objects which should be played one after the other. Each learning point that makes up the learning object has it's own directory. All of the actual content files reside in these directories and are referenced by the ELO.XML file.

The XML file format is a hierarchical list of topics which represents the structure and play order of a Learning Path.

The following is a sample XML file that represents a learning object.

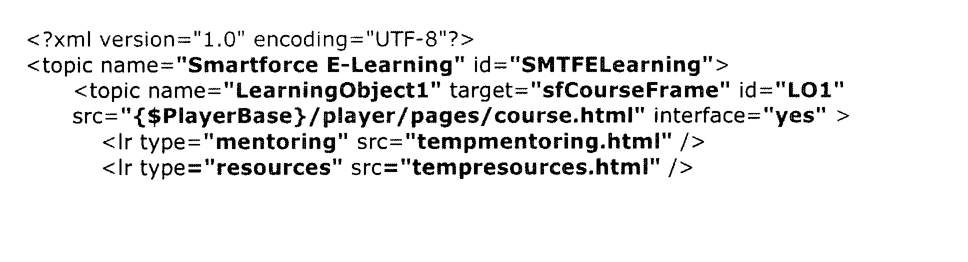

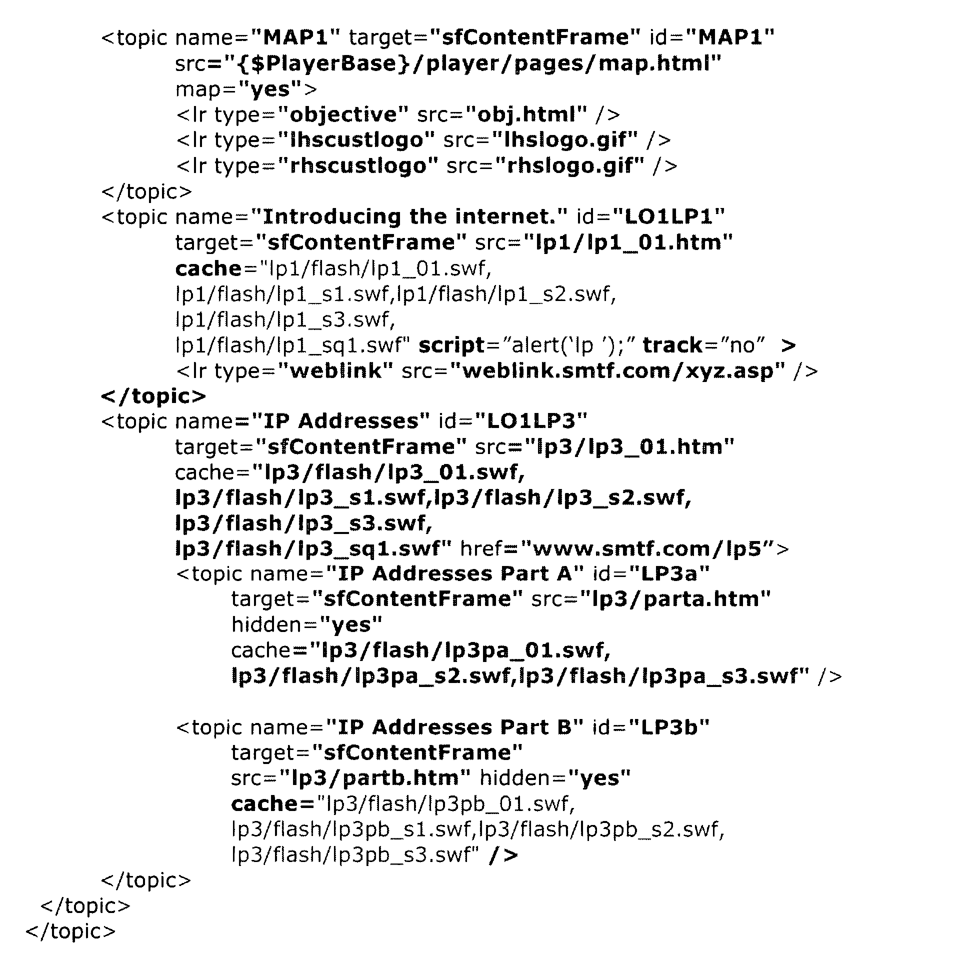

### The Header

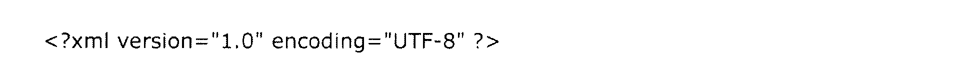

This is part of all XML files and is included at the start of every XML File.

The term "topic" means content at a starting level and within this there are child topics. If a course starts at a Learning Path level, everything in the XML file is referred to as a topic, and there is one child topic for each module. Each module has one child topic for each Learning Event, in turn having one child topic for each Learning Object.

### The Parent Topic

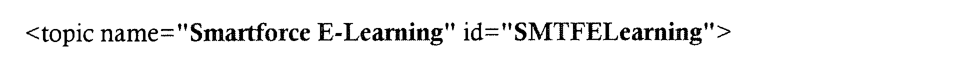

This is a container topic that contains the Learning Object. It is not considered a 'playable' topic. Only topics with a source or a script attribute set are considered 'playable'.

### The Interface Topic

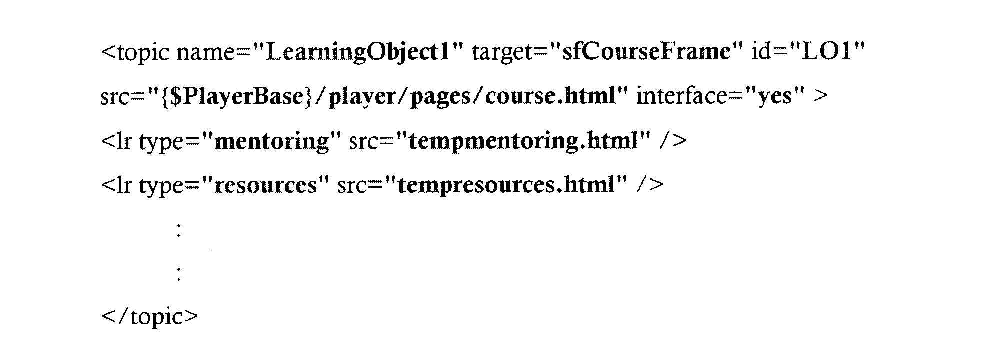

This is a required topic for all Learning Objects. The purpose of this topic is to setup the interface frames sfInfoFrame, sfContentFrame, sfNavFrame, as described above. The following describes attributes for this required topic.
**name:** This attribute is the name of the Learning Object and it appears in a bar on the sfInfoFrame
**target:** This attribute for this topic must be sfCourseFrame. This indicates that the source for this topic gets loaded into the course frame.
**id:** This is a unique id within this Learning Object. It is the id for this topic.
**src:** The URL specified here must set up the interface frames sfInfoFrame, sfContentFrame, sfNavFrame. It can be replaced but the required frames and associated functions must be mirrored in the new file. The PlayerBase constant shown here can be used to specify files relative to the codebase of the applet. This is expanded to the codebase of the applet when then XML file is parsed.
**interface:** This indicates that this topic is the interface topic.

### Learning Resources:

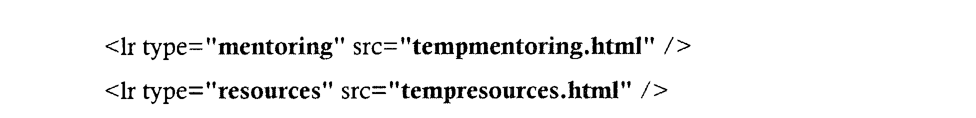

The next element in this sample file is a Learning Resource <lr .. Learning Resources are an extra piece of content that is available when playing certain topics. Learning Resources are optional and not inherited. The player uses some predefined Learning Resources for specific uses.

The Interface topic can have two optional predefined Learning Resources. These are **mentoring** and **resources.** The source of the URL specified in these Learning Resources is launched in a new window when the student clicks the mentoring/resources buttons. These buttons are part of the interface and therefore the mentoring/resources Learning Resources are specified as children of the interface topic.

### The Map Topic

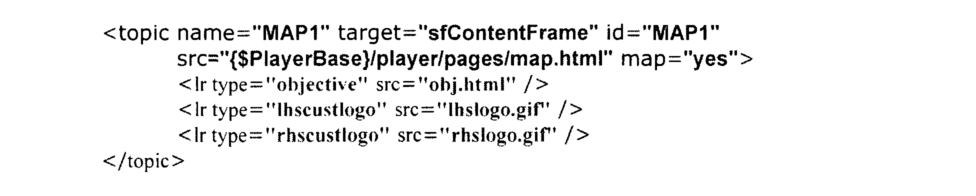

This is not a required topic. It is possible to have a Learning Object that does not have a map. If a map is required however the map topic should be included directly after the interface topic. A map topic is indicated by the attribute map="**yes**". The target of a map topic must be **sfContentFrame** and unless a replacement map file is used then the src of the map topic must be **src="{$PlayerBase}/player/pages/map.htinl".** As before the PlayerBase constant shown here can be used to specify files relative to the codebase of the applet. This is expanded to the codebase of the applet when then XML file is parsed. Again as in the case of the interface topic a map topic can have three predefined Learning Resources, **objective, lhscustlogo, rhscustlogo.** These Learning Resources allow customization of the map (sfContentFrame) portion of the interface. There is more information on these in the Learning Resources section later.

### A Learning Point Topic

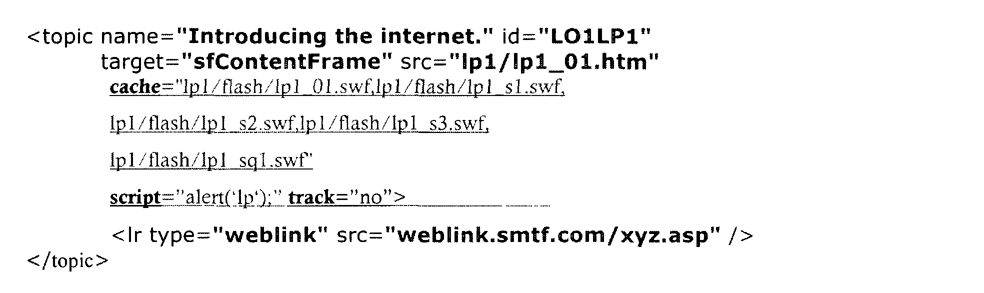

This is an example of a typical Learning Point within a Learning Object. Lets examine each attribute.
**name:** This is the text that appears in the Learning Point list on the map And also appears in the bubble help of the Learning Point graphics in the navigation frame **sfNavFrame**
**id:** This is a unique id within this Learning Object. It is the id for this topic.
**target:** This must be **sfContentFrame** i.e. the middle frame of the interface.
**src:** This is the file that loads then this Learning Point is chosen by the student.
**cache:** This is a comma delimitated list of files that are played as part of this Learning Point. This is an optional tag but important as it allows the Applet to cache in advance the files needed for this Learning Point.
**script:** This is the JavaScript that gets executed when this Learning Point is played.
**track:** By default all Learning Points are tracked for progress. If tracking is not required for some reason for example if the Learning Point is a Learning Productions simulation that does it's own progress tracking, then it is possible to turn off tracking for this Learning Point by setting the attribute track="no"

This Learning Point also has an optional Learning Resource - **weblink**. This Learning Resource is used via the content. When a student activates a weblink in the content a new window opens and the source URL of the Learning Resource is requested.

Then next Learning Point in this sample file is

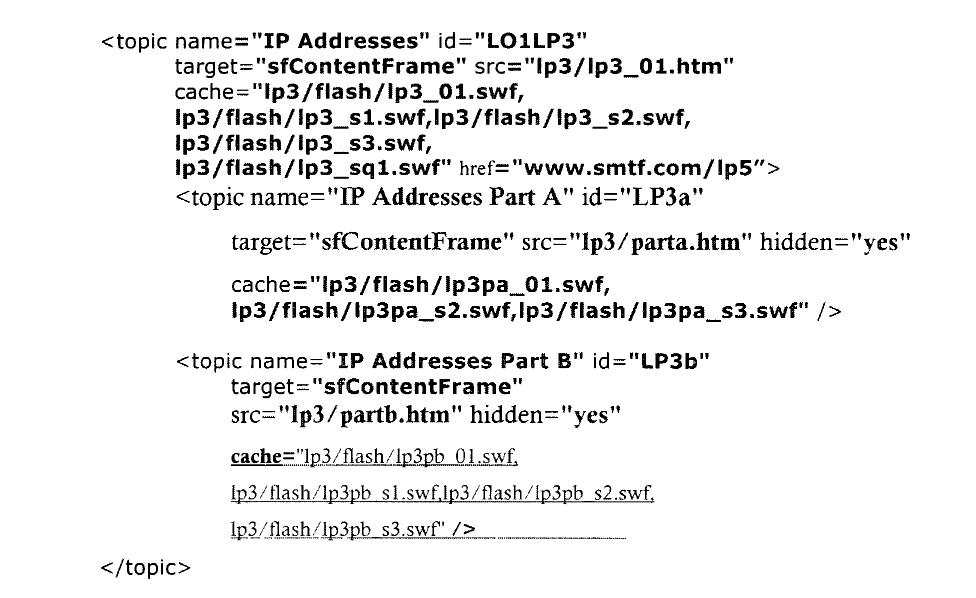

This is very similar to the one described above, with two differences. Firstly it has a *href* attribute and secondly it has two hidden child topics
**href:** This is the base *href* for this Learning Point and because it is inherited it is the base *href* for any children of this Learning Point. This means that any source attribute that is not a fully qualified URL will have this value pre-pended to it.
**child topics:** Child topics are the same as ordinary Learning Point topics. They are played in order. If the child topic is not hidden it appears to the student as just another Learning Point. If however the child topic is hidden then it is name does not display anywhere and it will appear to be just part of the parent topic content.

### Second Example File

The second sample file is different in that it does not contain any topics as described in the previous example. It contains a parent topic and three xmlfile references to other XML files, which may or may not contain references to other XML files. Eventually these references to XML files will describe at least one complete Learning Object in the format described in the first example XML file.

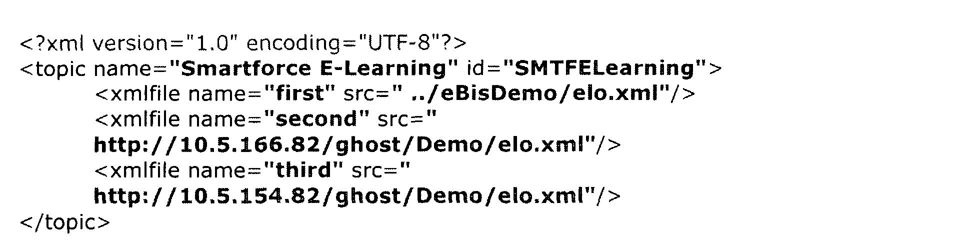

The format of this example file is very simple
**name:** The name of this element. This name appears nowhere.
**src:** The URL of the XML file to be included. This can be a fully qualified URL or relative to the current XML file.

### Third Example File

The third example file below is a combination of the previous two files. The only comment to make about this is that this file contains three Learning Objects. The first Learning Object is fully described in the file and has one Learning Point. The other two Learning Objects are described in the referenced XML files.

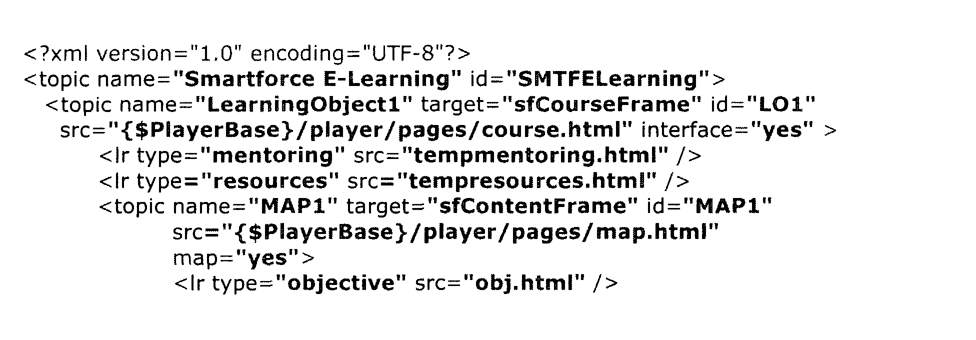

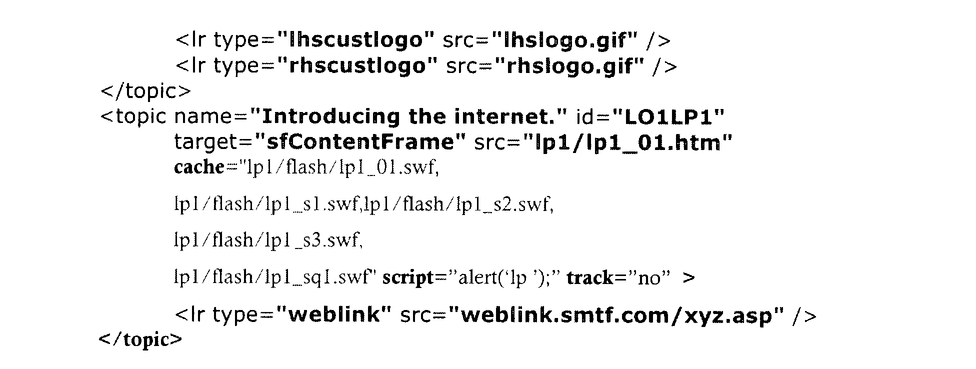

### DTD

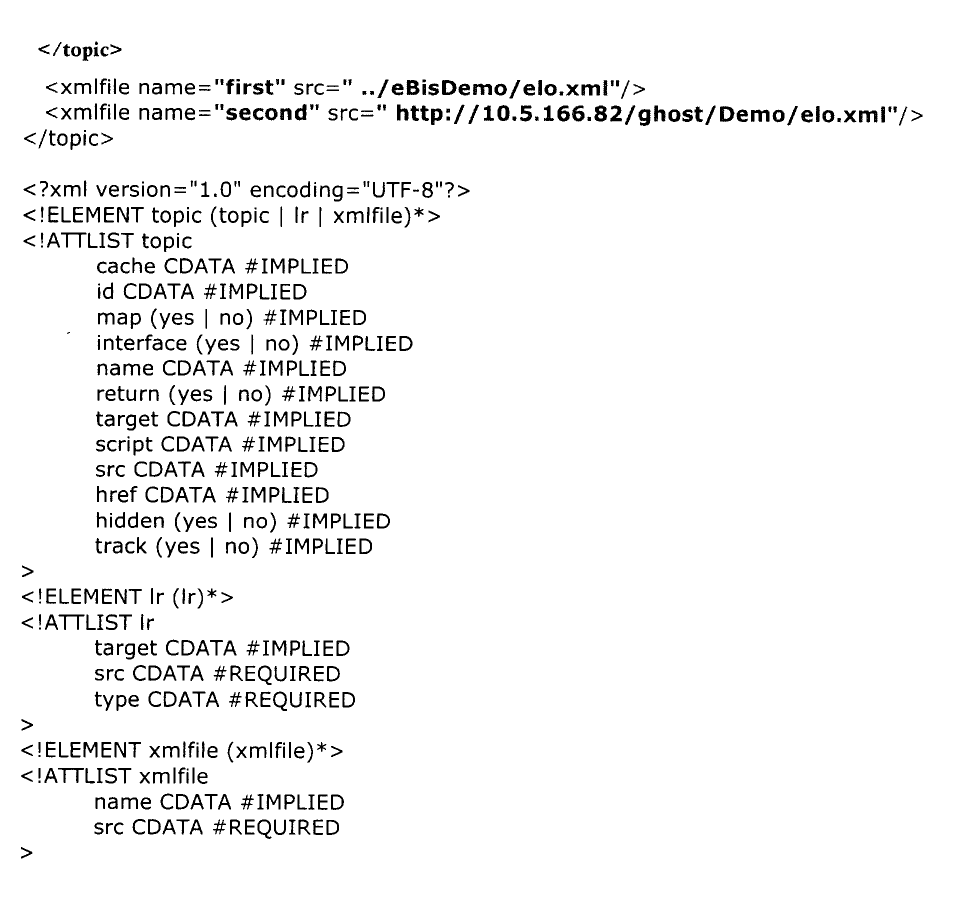

The DTD consists of three types of elements: Topics, XMLFiles described above, and Learning Resources.

### Topics

The XML file format consists of a hierarchical structure consisting of topics. A topic, as described above, is a piece of data that can represent anything from a full curriculum, to a learning path, to an e-learning object, to a learning point.

### Topic Attributes

### cache CDATA #IMPLIED

The cache attribute is a comma-delimited list of files that are downloaded by the player, into the browser's cache when this topic is played. The cache attribute is optional, but should be used as much as possible to minimize the user's wait time.

### id CDATA #IMPLIED

This is the id of the current topic. This can be any string, and it should be unique within the XML file. It is used by the player to jump to different topics.

### map (yes I no) #IMPLIED

This lets the player know that this topic is a map topic and should not be tracked. It map also be used to change interface elements on the screen.

### name CDATA #IMPLIED

This is the human-readable name of the topic. This is displayed in the title bar of the browser when this topic is played.

### return (yes I no) #IMPLIED

This is a navigation attribute. If this attribute is set to yes, the student will return to the parent topic of the current tree structure instead of going onto the parent topic of the next tree structure. This can be used as a "Return To Map" attribute.

### target CDATA #IMPLIED

This specifies the window frame that the topic should be played in. If this target does not exist, a new browser window will be created. Its children inherit this attribute.

### script CDATA #IMPLIED

This specifies any JavaScript code that should be executed when this topic is played.

### src CDATA #IMPLIED

This is the URL source of the topic to be played. This topic is played in the target for this topic.

### href CDATA #IMPLIED

The base href for this topic. Any src attribute that is not a fully qualified URL will have this value pre-pended to it. Its children inherit this attribute. This defaults to the player's codebase.

### hidden (yes | no) #IMPLIED

This specifies a topic that is hidden to the players API calls. It will not be listed in the topic count, but will be played like any other topic.

### track (yes | no) #IMPLIED

This specifies a topic that is tracked by the player and the progress of which is reported to the progress database.

### Learning Resources

Learning Resources are extra pieces of contents that are available to the student when playing certain topics. Learning Resources are optional and are not inherited.

### Learning Resource Attributes

### target CDATA #IMPLIED

The browser's target that this Learning Resource should be played in. If the target does not exist a new one will be created.

### src CDATA #REQUIRED

The URL source of this learning resource.

### type CDATA #REQUIRED

A string specifying the type of this resource.

### Some predefined Learning Resources.

The player (Applet together with the frame programs) uses some predefined Learning Resources for specific uses. They are as follows mentoring, resources, objective, lhscustlogo, rhscustlogo and weblink. These learning resources are children of the topic that requires them. The first five used in the initial map screen are children of the map topic, whereas the Weblink learning resource is a child of the content topic in which the weblink occurs.

### Mentoring

The src for this learning resource is a fully qualified URL, with any additional required parameters included. This is used for the mentoring button that is displayed in the upper panel of the player. When this button gets clicked a new window opens and the src URL is requested.

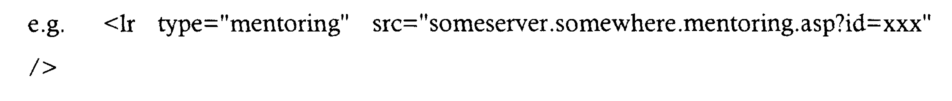

### Resources

The src for this learning resource is a fully qualified URL, with any additional required parameters included. This is used for the resources button that is displayed in the upper panel of the player. When this button gets clicked a new window opens and the src URL is requested.

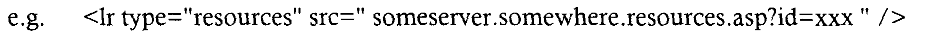

### objective

If the src for this learning resource is not a fully qualified URL then its default is the LO base directory. This is used for displaying the objectives for this LO in the map screen. It can be a gif, html file, flash movie etc.

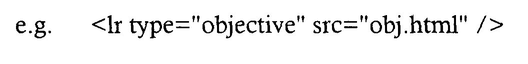

### lhscustlogo

The src for this is an image. If it is not fully qualified then its default is the LO base directory. This image appears on the map in the top left hand corner, just above the objective. It must be an image file.

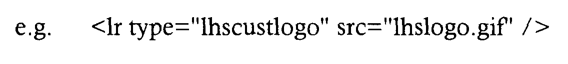

### rhscustlogo

If the src for this learning resource is not a fully qualified URL then its default is the LO base directory. This is used for displaying a customizable logo on the right hand side of the map for this LO in the map screen. It can be a gif, html file, flash movie etc.

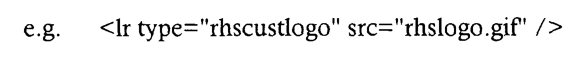

### weblink

The src for this learning resource is a fully qualified URL, with any additional required parameters included. This is used via the content, when the user activates a weblink in the content a new window opens and the src URL is requested, but first an id provide by the content is appended.

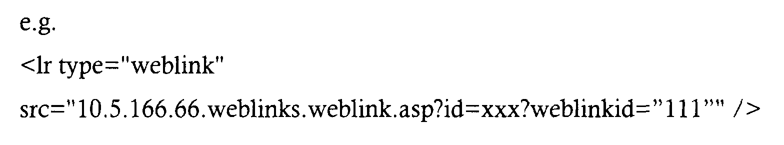

### XML FILE

The "xmlfile" element of an XML file is a shorthand way of referencing other Learning Objects by including a reference to the XML file of that particular Learning Object rather than including the 'topics' of the Learning Object.

### XMLFile Attributes

### name CDATA #IMPLIED

This is the human-readable name of the XML file. It is not displayed anywhere.

### src CDATA #IMPLIED

This is the URL source of the XML file that is to be included.

It will be appreciated that the invention provides for excellent versatility in choice of course content without affecting the manner in which the student uses the system. The student experiences consistent and user-friendly mechanisms for progressing through a course, and accessing information resources for such things as mentoring. The system 1 can be dynamically adapted in a versatile manner for changing course content without the need for any modifications to the manner in which the student uses the courseware. A key advantage is that Internet training is possible without the need for the student to purchase a training product or to have a computer which is pre-programmed in any way for computer based training.

The invention is not limited to the embodiments described but may be varied in construction and detail within the scope of the claims.

## Claims

1. A computer based training method carried out by a computer used by a student,
wherein the computer is a client computer and the method comprises the steps of a server-based training system dynamically downloading training content to the client computer in response to student instructions received by the client computer.

2. A method as claimed in claim 1, wherein the system downloads a control program, a content data file, and a navigation frame program to the client computer, and the step of downloading content comprises the sub-steps of:
the navigation frame program notifying the control program of the need for content according to a student request, and
the control program requesting the content from the system according to the content data file.

3. A method as claimed in claim 1 or 2, wherein the content data file defines the location of selected content on the system.

4. A method as claimed in claim 3, wherein the content data file relates to one or more learning object, each learning object containing a plurality of learning points.

5. A method as claimed in any of claims 2 to 4, wherein the system also downloads a content frame program for a screen frame dedicated to output of content.

6. A method as claimed in any of claims 2 to 5, wherein the control program is registered in the client computer as a frame program, and its frame dimensions are such that the frame is hidden from the student.

7. A method as claimed in any of claims 2 to 6, wherein the navigation frame program establishes a frame in the client computer for navigation user interaction independently of current content.

8. A method as claimed in claim 7, wherein the navigation frame program notifies the control program of a next selected content according to a student request.

9. A method as claimed in any of claims 7 to 9, wherein the navigation frame program operates independently of the content frame program.

10. A method as claimed in any of claims 2 to 9, wherein the system downloads an information frame program which establishes a frame in the client computer for student selection of access to requested auxiliary information resources separate from the content defined in the content data file, and said information frame program requests relevant URL's from the control program.

11. A method as claimed in claim 10, wherein the information frame program notifies the control program of requested resources, and the control program directs access to the URL's of the information frame.

12. A method as claimed in claim 10 or 11, wherein the information frame program operates independently of the content frame program.

13. A method as claimed in any of claims 2 to 12, wherein the system downloads a progress variables frame program, said program establishes a hidden frame in the client computer, and receives updates to course progress variables as a student progresses through a course.

14. A method as claimed in any of claims 7 to 13, wherein the navigation frame program updates said progress variables, and said updates are performed when a new learning point is activated.

15. A method as claimed in any of claims 10 to 14, wherein the system stores information resource settings accordingly to a student registration configuration and each learning object as represented by the content data file, and the system downloads said setting for the information frame program.

16. A method as claimed in claim 15, wherein the settings are embedded in the content data file, and the control program parses the content data file to obtain the settings in response to a request from the information frame program.

17. A method as claimed in any preceding claim, wherein the system downloads a start document at the start of a course, the start document defines an initial screen display and identifiers of progress variables to be updated with assistance from the progress variables frame program.

18. A method as claimed in claim 17, wherein the system also downloads command line parameters indicating the location in the system of the content data file.

19. A method as claimed in claim 18, wherein the system downloads the control program after downloading the command line parameters, and the control program parses the command line parameters to determine the location of the content data file.

20. A method as claimed in any of claims 2 to 19, wherein at the start of a course the control program parses the content data file to locate an identifier for a content map and causes the content map to be downloaded, and the content frame program allows student selection of desired content.

21. A method as claimed in claim 20, wherein initial content is downloaded in response to a student selection using the content map, and subsequent content is selected in response to student inputs for the navigation frame program.

22. A computer based training method carried out by a client computer used by a student and a server-based training system, the method comprising the steps of:
the system downloading a control program and command line parameters to the client computer, the control program being a frame program having a hidden frame;
the control program parsing the command line parameters to determine the location of a content data file and requesting the system to download said file;
the system downloading a navigation frame program which generates a navigation frame on the client computer,
the student selecting desired content by making selections in the navigation frame, the navigation frame program notifying the control program of the selections, the control program parsing the content data field to determine location of said content, and the control program requesting said content from the system; and
the navigation frame program updating course progress variables as fresh content is downloaded and played.

23. A method as claimed in claim 22, wherein the method comprises the further steps of the system downloading a content frame program, said program establishing a frame for output of said content and notifying the control program of content-related student requests.

24. A method as claimed in claim 22 or 23, wherein the method comprises the further steps of the system downloading a progress variables frame program, said program establishing a hidden frame in the client computer, and the control program parsing said progress variables frame program to satisfy system tracking requests.

25. A method as claimed in any of claims 22 to 24, wherein the method comprises the further steps of the system downloading an information frame program, said program establishing an information resources frame with URL buttons, and the control program accessing information resources in response to student pressing of said buttons.

26. A computer based training system comprising:
means for accessing content for a training course;
means for dynamically downloading said content to direct progress of a course on a client computer in a manner as claimed n any preceding claim.
